# EUROPEAN PATENT SPECIFICATION

(11) **EP 4 329 079 B1**
(45) Date of publication and mention of the grant of the patent: **29.07.2026**
(21) Application number: 22916640.0
(22) Date of filing: 23.12.2022
(51) Int. Cl.: H01M 50/471, H01M 50/289, H01M 50/509, H01M 50/591, H01M 50/264, H01M 50/258, H01M 10/42, H01M 50/298

(54) **BATTERY PACK**
BATTERIEPACK
BLOC-BATTERIE

(30) Priority: 27.12.2021 KR 20210188568
(43) Date of publication of application: 28.02.2024
(73) Proprietor: LG Energy Solution, Ltd., Seoul 07335 (KR)
(72) Inventor: CHOI, Byung-Hyuk, Daejeon 34122 (KR); SHIN, Jong-Chan, Daejeon 34122 (KR); KIM, Ki-Youn, Daejeon 34122 (KR)
(74) Representative: Plasseraud IP
(86) International application number: PCT/KR2022/021258
(87) International publication number: WO 2023/128499

(56) References cited:
- EP-A1- 4 290 656
- EP-A2- 3 413 375
- WO-A1-2016/030144
- JP-A- 2012 124 071
- JP-B2- 5 601 960
- KR-A- 20170 087 084
- KR-A- 20180 050 086
- KR-A- 20180 107 569
- KR-A- 20200 080 406

## Description

### TECHNICAL FIELD

The present application claims priority to Korean Patent Application No. 10-2021-0188568 filed on December 27, 2021. The present disclosure relates to a battery pack.

### BACKGROUND ART

JP 5 601960 B2 relates to a power storage system with a plurality of cell modules BT, a battery module, an AC/DC conversion part, a DC/DC conversion part, a supervisory control device, and a control unit. In this known power storage system, different modular elements can be mechanically and electrically connected via a fixing member, which joins together angular edges of adjacent modular elements.

Currently commercialized secondary batteries include nickel cadmium batteries, nickel hydride batteries, nickel zinc batteries, lithium secondary batteries and the like, and among them, lithium secondary batteries are in the spotlight because they have almost no memory effect compared to nickel-based secondary batteries and thus have advantages of free charge/discharge, very low self-discharge rate and high energy density.

Such lithium secondary batteries mainly use a lithium-based oxide and a carbon material as a positive electrode active material and a negative electrode active material, respectively. Lithium secondary batteries include an electrode assembly in which a positive electrode plate and a negative electrode plate coated with the positive electrode active material and the negative electrode active material, respectively are disposed with a separator interposed therebetween, and an exterior material, that is, a battery case, for sealing and accommodating the electrode assembly together with an electrolyte.

In general, depending on the shape of an exterior material, lithium secondary batteries may be classified into a can-type secondary battery in which an electrode assembly is embedded in a metal can, and a pouch-type secondary battery in which an electrode assembly is embedded in a pouch of an aluminum laminate sheet.

Such secondary batteries are widely used not only in small devices such as portable electronic devices, but also in medium and large devices such as electric vehicles and energy storage systems (ESSs), and the degree of use thereof is rapidly increasing. Moreover, in recent years, residential energy storage systems have been widely used to store and supply electric power for use in buildings such as houses and buildings. In addition, the core component of such residential energy storage systems may be referred to as a battery pack.

Various battery packs, including those used in such residential ESSs, include a plurality of battery cells (secondary batteries) to increase capacity and/or output. In particular, there is a demand for an ESS capable of flexibly changing the configuration of a battery pack to meet the needs of various customers. In addition, there is a demand for an ESS capable of being shaped differently so that it may be installed even with various spatial constraints.

### DISCLOSURE

### Technical Problem

The present disclosure is designed to solve the above-described problems and other problems.

The present disclosure may also be directed to providing a battery pack capable of configuring various number of battery modules.

The present disclosure may also be directed to providing a battery pack capable of configuring various number of processing units.

The present disclosure may also be directed to providing a battery pack that may be configured in various forms of appearance.

The present disclosure may also be directed to providing a battery pack having a coupling member capable of connecting a neighboring battery module or a neighboring processing unit and a battery module.

The present disclosure may also be directed to providing a battery pack having a corner cover capable of covering a corner between a neighboring battery module or a neighboring processing unit and a battery module.

The present disclosure may also be directed to providing a battery pack capable of improving productivity and assemblability through commonization of parts.

### Technical Solution

A battery pack according to one aspect of the present disclosure for achieving the above-described objectives is defined in claim 1 and it includes a first battery module having a first corner formed by two side plates; a processing unit having a second corner formed by two side plates, electrically connected to the first battery module and controlling charge/discharge of the battery module; and a first coupling member having one side fastened to the first corner and the other side fastened to the second corner.

In addition, the first battery module is located on one side of the processing unit, and the first corner and the second corner are adjacent.

In addition, the battery pack further includes a double corner cover configured in the form of a flat plate, hookedly coupled to the first coupling member and covering the first corner and the second corner.

In addition, the battery pack further includes a cable passing through a first opening formed at the first corner and a second opening formed at the second corner and the double corner cover covers the cable.

In addition, the battery pack may further include a second battery module located on the other side of the processing unit and electrically connected to the processing unit; and a second coupling member having one side fastened to the second battery module and the other side fastened to the processing unit.

An energy storage system according to one aspect of the present disclosure for achieving the above-described objectives includes a battery pack according to one aspect of the present disclosure.

### Advantageous Effects

According to at least one of the embodiments of the present disclosure, it is possible to provide a battery pack capable of configuring various number of battery modules.

According to at least one of the embodiments of the present disclosure, it is possible to provide a battery pack capable of configuring various number of processing units.

According to at least one of the embodiments of the present disclosure, it is possible to provide a battery pack that may be configured in various forms of appearance.

According to at least one of the embodiments of the present disclosure, it is possible to provide a battery pack having a coupling member capable of connecting a neighboring battery module or a neighboring processing unit and a battery module.

According to at least one of the embodiments of the present disclosure, it is possible to provide a battery pack having a corner cover capable of covering a corner between a neighboring battery module or a neighboring processing unit and a battery module.

According to at least one of the embodiments of the present disclosure, it is possible to provide a battery pack capable of improving productivity and assemblability through commonization of parts.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view showing a battery pack according to an embodiment of the present disclosure.
FIG. 2 is a view separately showing some configurations of a battery pack according to an embodiment of the present disclosure.
FIGS. 3 and 4 are perspective views showing a coupling member of a battery pack according to an embodiment of the present disclosure.
FIG. 5 is an enlarged view of portion A of FIG. 2.
FIG. 6 is a view of a corner cover of a battery pack according to an embodiment of the present disclosure as viewed from the outside.
FIG. 7 is a view of a corner cover of a battery pack according to an embodiment of the present disclosure as viewed from the inside.
FIG. 8 is a view showing that a corner cover of a battery pack according to an embodiment of the present disclosure is coupled to a battery module and a processing unit.
FIG. 9 is a view showing that a corner cover of a battery pack according to an embodiment of the present disclosure is coupled to a coupling member.
FIG. 10 is an enlarged view of a corner cover of a battery pack according to an embodiment of the present disclosure.
FIG. 11 is a perspective view showing a corner of a battery pack according to an embodiment of the present disclosure.
FIG. 12 is a perspective view showing a corner cover of a battery pack according to an embodiment of the present disclosure.
FIG. 13 is a perspective view of an inner surface of a corner cover of a battery pack according to an embodiment of the present disclosure.
FIG. 14 is a view showing the coupling of a corner cover of a battery pack according to an embodiment of the present disclosure and a coupling member.
FIG. 15 is a view showing that a corner cover is coupled to a corner of a battery pack according to an embodiment of the present disclosure.
FIG. 16 is a view showing a portion of a cross-sectional configuration along the cutting line B-B' in FIG. 15.
FIG. 17 is a view showing a portion of a cross-sectional configuration along the cutting line C-C' in FIG. 15.
FIG. 18 is a perspective view of a battery pack according to an embodiment of the present disclosure as viewed from the rear.
FIG. 19 is a view showing a wall mount bracket of a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

As used in the following description, terms such as first, second, and the like may be used. These terms are only intended to distinguish the component from other components, and the nature, sequence, or order of the corresponding component is not limited by the term.

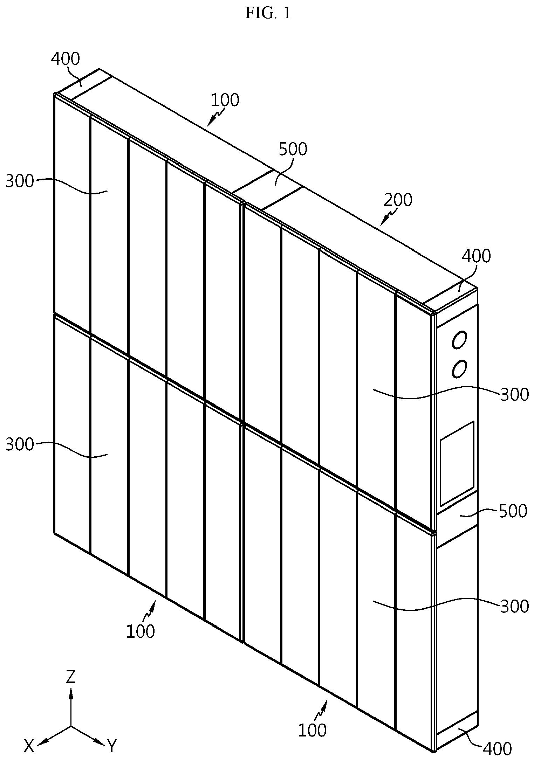

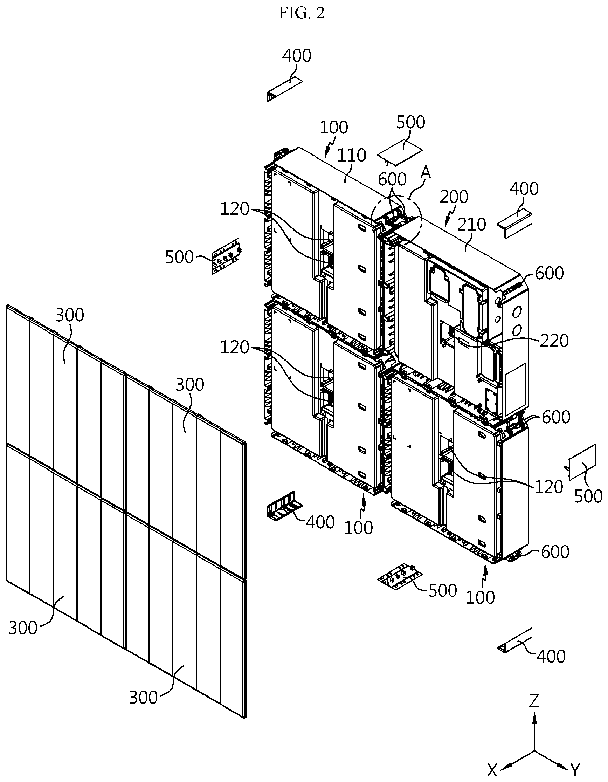

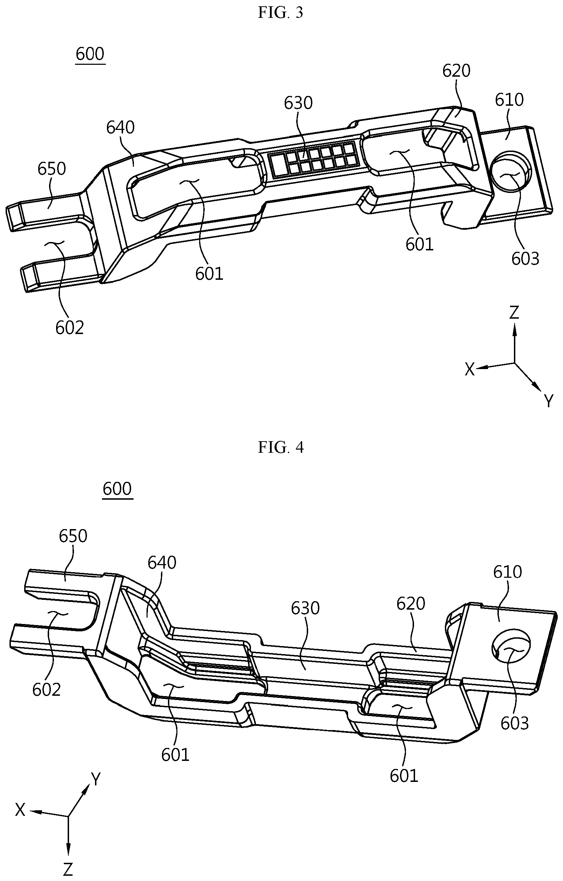

FIG. 1 is a perspective view showing a battery pack according to an embodiment of the present disclosure. FIG. 2 is a view separately showing some configurations of a battery pack according to an embodiment of the present disclosure. FIGS. 3 and 4 are perspective views showing a coupling member of a battery pack according to an embodiment of the present disclosure. Referring to FIGS. 1 to 4, a battery pack according to an embodiment of the present disclosure may include a battery module 100, a processing unit 200, and a first coupling member 600.

The battery module 100 may include a first corner 111 formed by two side plates and a first opening 112 formed at the first corner 111. The battery module 100 may have a rectangular parallelepiped shape. The housing 110 may form the appearance of the battery module 100. The housing 110 of the battery module 100 may include a front plate and four side plates. Also, the four side plates of the housing 110 may form four corners 111. The four corners may be configured in a shape of chamfering. Alternatively, the corner 111 may be a plate connecting two side plates. Alternatively, the corner 111 may be formed by two side plates. The corner 111 may have an opening 112. The opening 112 may be open in the forward or X-axis direction. The four corners 111 may have substantially the same shape. The battery module 100 may include a plurality of battery cells therein. In this case, the battery cell may be a secondary battery. The battery module 100 may charge power to the battery cells or discharge power from the battery cells to the outside. Depending on the required amount of power or output, the battery pack may be composed of a plurality of battery modules 100. For example, as shown in FIG. 1, the battery pack may include three battery modules 100.

The processing unit 200 is located on one side of the battery module 100 and controls charge/discharge of the battery module 100, and may include a second corner 211 adjacent to the first corner 111 and a second opening 212 formed at the second corner 211. The processing unit 200 may have a rectangular parallelepiped shape. The housing 210 may form the appearance of the processing unit 200. Appearances or sizes of the processing unit 200 and the battery module 100 may be configured to be very similar or substantially the same. The housing 210 of the processing unit 200 may include a front plate and four side plates. Also, the four side plates of the housing 210 may form four corners 211. The four corners 211 may be configured in a shape of chamfering. Alternatively, the corner 211 may be a plate connecting two side plates. Alternatively, the corner 211 may be formed by two side plates. The corner 211 may have an opening 212. The opening 212 may be open in the forward or X-axis direction. The four corners 211 may have substantially the same shape. The battery module 100 may include a plurality of battery cells therein. In this case, the battery cell may be a secondary battery. The processing unit 200 may be electrically linked, connected, or coupled to a plurality of battery modules 100. The processing unit 200 may control charge/discharge of the battery module 100. Also, the processing unit 200 may detect and obtain status information of the battery module 100. The battery pack may be configured to include a plurality of processing units 200 to control a plurality of battery modules 100.

For example, as shown in FIG. 1, the battery pack may include three battery modules 100 and one processing unit 200. Three battery modules 100 and one processing unit 200 may be electrically connected to each other. The processing unit 200 may control charge/discharge of the three battery modules 100, and may obtain or detect status information such as voltage or temperature of the three battery modules 100.

Each corner 111 of the battery module 100 and each corner 211 of the processing unit 200 may be configured to have substantially the same shape.

The first coupling member 600 may be configured to have one side fastened to the first corner 111 and the other side fastened to the second corner 211.

One side of the coupling member 600 may be fastened to the first corner 111 by the fastening member S. In addition, the other side of the coupling member 600 may be fastened to the second corner 211 by the fastening member S. The coupling member 600 may be configured in plurality. For example, referring to FIG. 3, two coupling members 600 may be fastened to the battery module 100 and the processing unit 200. The two coupling members 600 may physically connect, couple, or fasten the battery module 100 and the processing unit 200.

The coupling member 600 may physically connect, couple, or fasten two neighboring battery modules 100. Also, the coupling member 600 may physically connect, couple, or fasten two neighboring processing units 200. In addition, the coupling member 600 may physically connect, couple, or fasten the neighboring battery module 100 and the processing unit 200.

Referring to FIGS. 3 and 4, the coupling member 600 may include a first part 610, a second part 620, a third part 630, a fourth part 640, and a fifth part 650. The second part 620 may extend in the +Z-axis direction from the first part 610 and then be bent to extend in the +X-axis direction. The third part 630 may extend in the +X-axis direction from the second part 620. The fourth part 640 may extend in the +X-axis direction from the third part 630 and then be bent to extend in the -Z-axis direction. The fifth part 650 may extend in the +X-axis direction from the fourth part 640. The second hole 603 may be formed in the first part 610. The holes 601 may be formed in the second part 620 and the fourth part 640, respectively. The hole 602 may be formed in the fifth part 650. The hole 602 may be a long hole extending along the X-axis direction. The hole 602 may have a shape open in the +X-axis direction.

According to this configuration of the present disclosure, the coupling member 600 may stably connect, couple, or fasten the battery module 100 and the processing unit 200 constituting the battery pack.

According to this configuration of the present disclosure, the battery pack may include one or more battery modules 100 and one or more processing units 200 in various combinations. Also, the positional relationship or coupling relationship of the battery module 100 and the processing unit 200 constituting the battery pack may be configured in various ways. Accordingly, it may be configured to flexibly correspond to the amount of power or output variously required for the battery pack. In addition, since the external shape of the battery pack is configured to be variously deformable, it may be freed from restrictions of a space in which the battery pack is installed.

Referring to FIGS. 1 and 2, a battery pack according to an embodiment of the present disclosure may include a double corner cover 500. The corner cover 500 may cover the first opening 112 and the second opening 212. The corner cover 500 may also be referred to as a double corner cover 500. The double corner cover 500 may be provided at a portion where the corner 111 of the battery module 100 and the corner 211 of the processing unit 200 are adjacent. Alternatively, the double corner cover 500 may be provided at a portion where the two corners 111, 211 are adjacent. In this case, the two neighboring corners 111, 211 may be the corner 111 of the battery module 100 or the corner 211 of the processing unit 200. Alternatively, in this case, the two neighboring corners 111 may be the corners 111 of the battery modules 100 that are adjacent to each other. Alternatively, in this case, the two neighboring corners 211 may be the corners 211 of the neighboring processing units 200. For example, referring to FIGS. 1 and 2, the battery pack may include two double corner covers 500 covering the corners 111, 211 formed by the processing unit 200 and the neighboring battery module 100, and two double corner covers 500 covering the corners 111 formed by two neighboring battery modules 100.

In addition, according to this configuration of the present disclosure, the double corner cover 500 may protect the internal configuration of the battery pack by covering the corner 111 of the neighboring battery module 100, the corner 211 of the neighboring processing unit 200, or the corner 211 of the neighboring battery module 100 and the processing unit 200. The battery module 100 and the processing unit 200 may have openings 112, 212 to be connected to an external configuration, and when the openings 112, 212 are exposed to the outside, the inside thereof may be damaged by penetration of foreign substances. The double corner cover 500 may protect the inside of the battery module 100 or the processing unit 200 by covering the openings 112, 212. As a result, the safety and life of the battery pack may be improved.

In addition, according to this configuration of the present disclosure, when the battery pack is installed outdoors, the double corner cover 500 may prevent sunlight from penetrating into the battery module 100 or the processing unit 200 through the openings 112, 212. As a result, the safety and life of the battery pack may be improved.

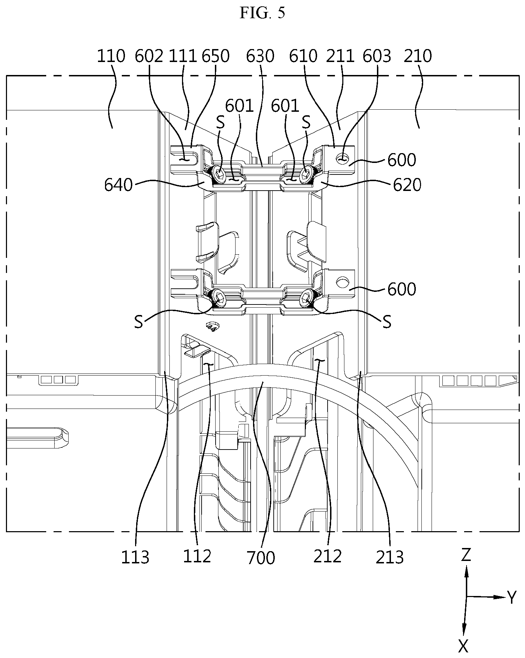

FIG. 5 is an enlarged view of portion A of FIG. 2. Referring to FIG. 5, the battery pack according to an embodiment of the present disclosure may further include a cable 700 passing through at least one of the first opening 112 and the second opening 212, and the double corner cover 500 may be configured to cover the cable 700.

The cable 700 may electrically connect the battery module 100 and the processing unit 200. In addition, the cable 700 may electrically connect the two battery modules 100. Also, when the battery pack includes a plurality of processing units 200, the cable 700 may electrically connect the two processing units 200. The cable 700 may be configured in plurality. The cable 700 may transmit power or signals. One or more battery modules 100 and one or more processing units 200 constituting the battery pack may be arranged in various forms. The cable 700 may be configured to pass through the openings 112, 212 formed at the corners 111, 211 in which the battery module 100 and the processing unit 200 are easily electrically connected. The cable 700 may pass through the openings 112, 212 formed at the corners 111, 211 of either the battery module 100 or the processing unit 200, and may pass through the openings 112, 212 formed at the corners 111, 211 of either the other battery module 100 or the other processing unit 200.

The double corner cover 500 may cover the cable 700. The cable 700 and the openings 112, 212 may be covered by the double corner cover 500.

According to this configuration of the present disclosure, the double corner cover 500 may prevent foreign substances from penetrating the cable 700 by covering the cable 700. In addition, the double corner cover 500 may prevent the cable 700 from being damaged by sunlight by covering the cable 700. As a result, the safety and life of the battery pack may be improved.

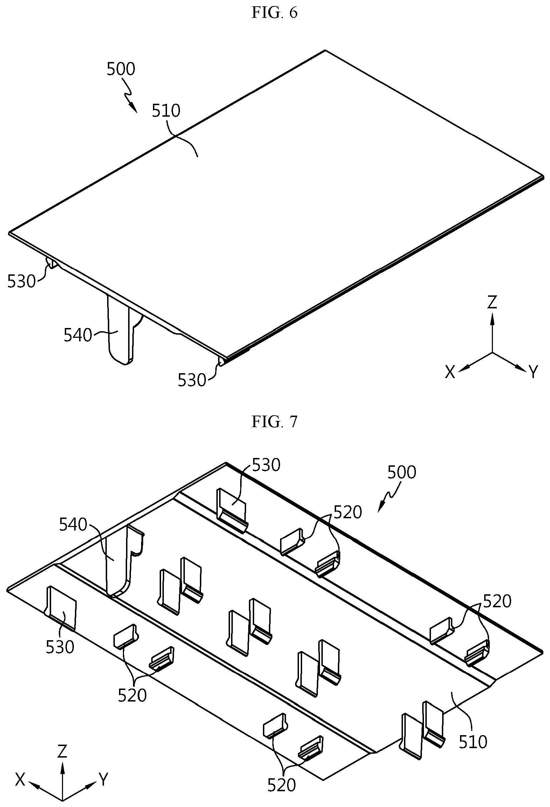

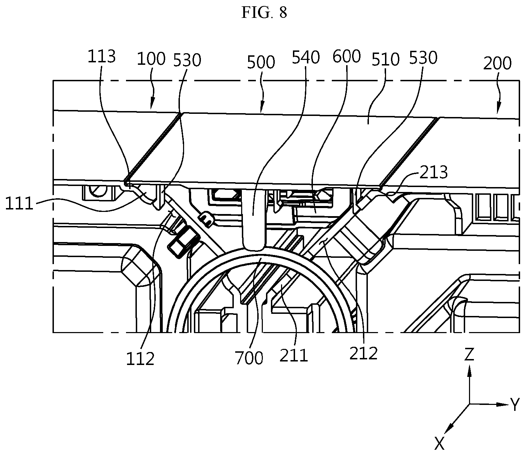

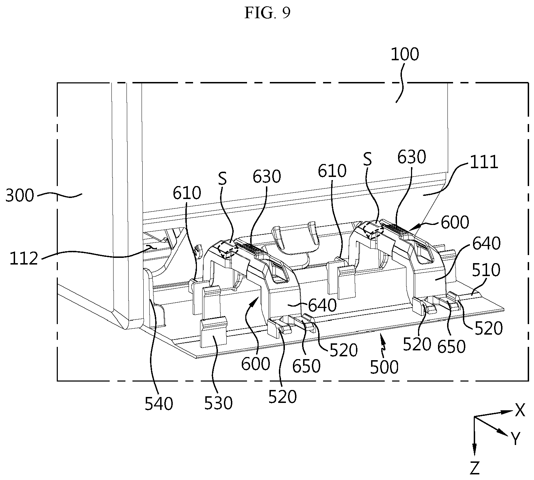

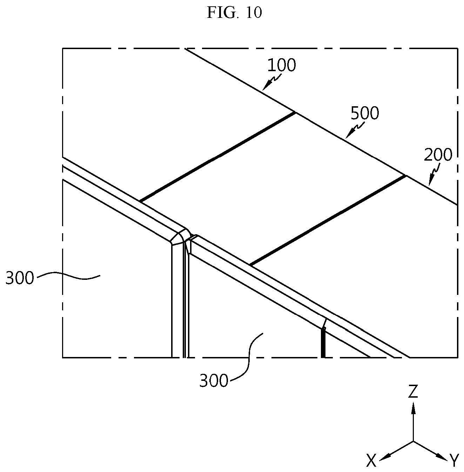

FIG. 6 is a view of a corner cover of a battery pack according to an embodiment of the present disclosure as viewed from the outside. FIG. 7 is a view of a corner cover of a battery pack according to an embodiment of the present disclosure as viewed from the inside. FIG. 8 is a view showing that a corner cover of a battery pack according to an embodiment of the present disclosure is coupled to a battery module and a processing unit. FIG. 9 is a view showing that a corner cover of a battery pack according to an embodiment of the present disclosure is coupled to a coupling member. FIG. 10 is an enlarged view of a corner cover of a battery pack according to an embodiment of the present disclosure.

Referring to FIGS. 6 and 10, a corner cover of a battery pack according to an embodiment of the present disclosure is configured in the form of a flat plate. The double corner cover may include a plate, and the plate may have a flat shape. The double corner cover may connect the side plates of two neighboring battery modules. Also, the double corner cover may connect the side plates of two neighboring processing units. In addition, referring to FIG. 10, the double corner cover may connect the side plate of the neighboring battery module and the side plate of the processing unit.

According to this configuration of the present disclosure, the double corner cover may prevent foreign substances from penetrating by covering a space between neighboring battery modules, between neighboring processing units, or between the neighboring battery module and the processing units. As a result, the safety and life of the battery pack may be improved.

Referring to FIGS. 6, 7 and 9, the corner cover 500 of the battery pack according to an embodiment of the present disclosure may include a first hook 520 formed on an inner surface and coupled to the coupling member 600. The double corner cover 500 may include a first hook 520 protruding toward the inside of the plate 510. The first hook 520 may be formed in plurality. Two pairs of first hooks 520 may be fastened to one coupling member 600. Alternatively, two pairs of first hooks 520 may be fastened to the first part 610 and the fifth part 650, respectively.

In addition, referring to FIGS. 7 and 9, the double corner cover 500 may include four pairs of first hooks 520. Two pairs of first hooks 520 may be fastened to each of the two coupling members 600.

According to this configuration of the present disclosure, the double corner cover 500 may be easily hookedly coupled to the coupling member 600 without a separate fastening member. As a result, the assemblability and productivity of the battery pack may be improved.

Referring to FIGS. 6, 7 and 8, the corner cover 500 of the battery pack according to an embodiment of the present disclosure may include a second hook 530 formed on an inner surface and coupled to the first opening 112 or the second opening 212.

The double corner cover 500 may include a second hook 530 protruding toward the inside of the plate 510. The second hook 530 may be formed in plurality. For example, referring to FIG. 8, the double corner cover 500 may include a second hook 530 fastened to the first opening 112 and a second hook 530 fastened to the second opening 212.

According to this configuration of the present disclosure, the double corner cover 500 may be easily hookedly coupled to the battery module 100 or the processing unit 200 without a separate fastening member. As a result, the assemblability and productivity of the battery pack may be improved.

Referring to FIGS. 5 and 8, the battery module 100 of the battery pack according to an embodiment of the present disclosure may further include a first stepped portion 113 formed at the first corner 111. In addition, the processing unit 200 may further include a second stepped portion 213 formed at the second corner 211. Also, the corner cover 500 may be seated on the first stepped portion 113 and the second stepped portion 213.

The first stepped portion 113 may be formed at both sides of the first corner 111. The first stepped portion 113 may be formed inside the side plate forming the first corner 111. The step of the first stepped portion 113 may be formed to be substantially equal to the thickness of the plate 500 of the double corner cover 500.

The second stepped portion 213 may be formed at both sides of the second corner 211. The second stepped portion 213 may be formed inside the side plate forming the second corner 211. The step of the second stepped portion 213 may be formed to be substantially equal to the thickness of the plate 510 of the double corner cover 500.

The plate 510 of the double corner cover 500 may be seated on the first stepped portion 113 and the second stepped portion 213. The first stepped portion 113 and the second stepped portion 213 may support the plate 510.

According to this configuration of the present disclosure, the double corner cover 500 may be seated on the first stepped portion 113 and the second stepped portion 213, thereby maintaining a stable coupling state with the battery module 100 or the processing unit 200. As a result, the stability of the battery pack may be improved.

Referring to FIGS. 1, 2 and 9, the battery pack according to an embodiment of the present disclosure may further include a first front cover 300 and a second front cover 300.

The first front cover 300 may be provided on the front surface of the battery module 100. Alternatively, the first front cover 300 may be fastened or coupled to the front plate or front surface of the battery module 100. The first front cover 300 may have a larger area than the front surface or front plate of the battery module 100. The battery module 100 may have a port 120 on the front surface or front plate. A cable 700 may be connected to the port 120. The battery module 100 may be electrically connected to another neighboring battery module 100 or processing unit 200 through the port 120. The first front cover 300 may cover the port 120 and the cable 700 connected to the port 120.

The second front cover 300 may be provided on the front surface of the processing unit 200. Alternatively, the second front cover 300 may be fastened or coupled to the front plate or front surface of the processing unit 200. The second front cover 300 may have a larger area than the front surface or front plate of the processing unit 200. The processing unit 200 may have a port 220 on the front surface or front plate. A cable 700 may be connected to port 220. The processing unit 200 may be electrically connected to an adjacent battery module 100 or another processing unit 200 through the port 220. The second front cover 300 may cover the port 120 and the cable 700 connected to the port 220. The first front cover 300 and the second front cover 300 may be configured to have substantially the same shape and structure.

At least one of the first front cover 300 and the second front cover 300 may cover the front side of the double corner cover 500. Referring to FIG. 10, the first front cover 300 and the second front cover 300 may cover the front side of the double corner cover 500. In addition, the first front cover 300 and the second front cover 300 may cover a space between the double corner cover 500 and the battery module 100 and a space between the double corner cover 500 and the processing unit 200.

According to this configuration of the present disclosure, the first front cover 300, the second front cover 300, and the double corner cover 500 may prevent foreign substances from penetrating by covering a space between neighboring battery modules 100, between neighboring processing units 200, or between the neighboring battery module and the processing unit 200. As a result, the safety and life of the battery pack may be improved.

Referring to FIGS. 9 and 10, the corner cover 500 of the battery pack according to an embodiment of the present disclosure may include a support portion 540 provided on the front side and supporting the rear surface of the first front cover 300 or the second front cover 300.

The support portion 540 may protrude toward the inside of the plate 510. The support portion 540 may be formed on the front side of the plate 510. The support portion 540 may support a portion where the first front cover 300 and the second front cover 300 are adjacent. A portion of the support portion 540 may support the rear surface of the first front cover 300, and a portion of the support portion 540 may support the rear surface of the second front cover 300.

According to this configuration of the present disclosure, the first front cover 300 and the second front cover 300 may be stably coupled by the double corner cover 500. As a result, the rigidity or stability of the battery pack may be improved.

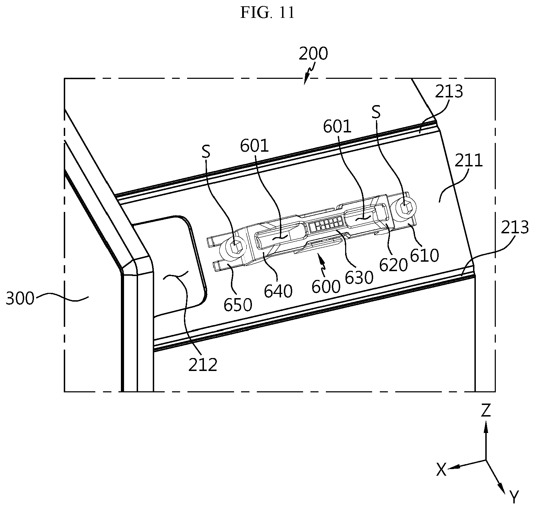

FIG. 11 is a perspective view showing a corner of a battery pack according to an embodiment of the present disclosure. Referring to FIG. 11, a coupling member may be fastened to a corner 211 of a battery pack according to an embodiment of the present disclosure. The corners 111, 211 may be the corner 111 of the battery module 100 or the corner 211 of the processing unit 200. The corners 111, 211 may be the corner 111 of the battery module 100 or the corner 211 of the processing unit 200 located at the outermost portion of the battery pack. The coupling member 600 may be fastened to the corners 111, 211. Both sides of the coupling member 600 may be fastened to the corners 111, 211 by the fastening member S. For example, referring to FIG. 11, both sides of the coupling member 600 may be fastened to the corner 211 of the processing unit 200 through holes 602, 603.

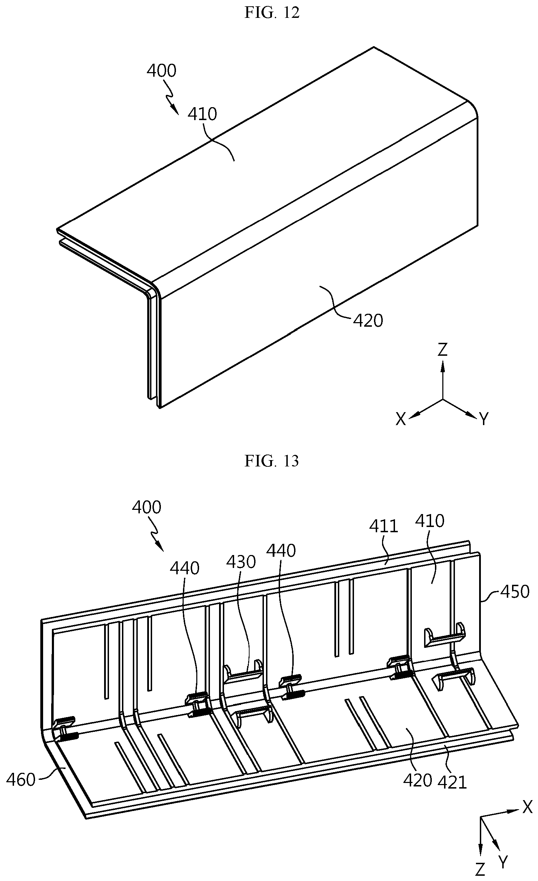

FIG. 12 is a perspective view showing a corner cover 400 of a battery pack according to an embodiment of the present disclosure. FIG. 13 is a perspective view of an inner surface of a corner cover 400 of a battery pack according to an embodiment of the present disclosure. A battery pack according to an embodiment of the present disclosure may include a corner cover 400. The corner cover 400 may be referred to as a single corner cover 400. The single corner cover 400 may have a bent plate shape. The single corner cover 400 may include a first part 410 and a second part 420. The first part 410 and the second part 420 may form a bent plate shape. For example, the first part 410 and the second part 420 may be connected vertically. The single corner cover 400 may be coupled to any one of the four corners 111, 211 of the battery module 100 or the processing unit 200.

The single corner cover 400 may include a guide 430 and a hook 440 protruding from the inner surface. The guide 430 may be provided as a pair. The hook 440 may be provided in two pairs. A pair of guides 430 may be provided on the first part 410 and the second part 420, respectively. Two pairs of hooks 440 may be provided on the first part 410 and the second part 420, respectively. The single corner cover 400 may include a protrusion 450 protruding toward the front side. The protrusion 450 may be formed across the first part 410 and the second part 420. In addition, the single corner cover 400 may have a groove 460 formed on the rear side. The groove 460 may be formed across the first part 410 and the second part 420.

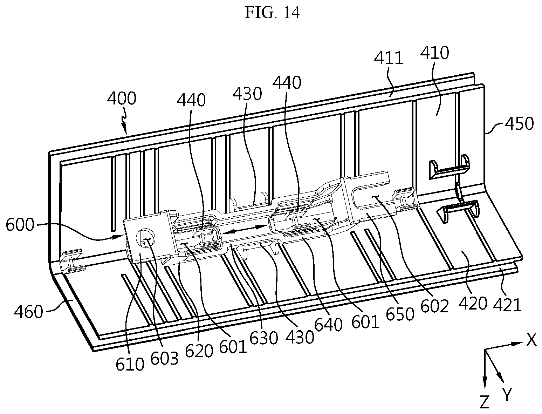

FIG. 14 is a view showing the coupling of a corner cover 400 of a battery pack according to an embodiment of the present disclosure and a coupling member 600. Referring to FIG. 14, the hook 440 may be fastened to the coupling member 600. The hook 440 may be fastened to the hole 601 of the coupling member 600. The hole 601 of the coupling member 600 may be formed as a pair. A pair of hooks 440 may be fastened to one hole 601. The coupling member 600 may be positioned between the pair of guides 430. The single corner cover 400 may be slid forward and backward after being hookedly coupled to the coupling member 600. The guide 430 may guide the sliding of the single corner cover 400 along the coupling member 600.

According to this configuration of the present disclosure, the single corner cover 400 may be easily hookedly coupled to the coupling member 600 without a separate fastening member. As a result, the assemblability and productivity of the battery pack may be improved.

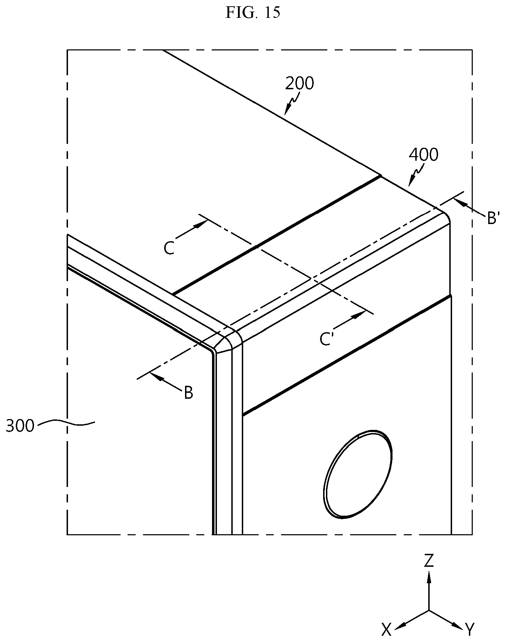

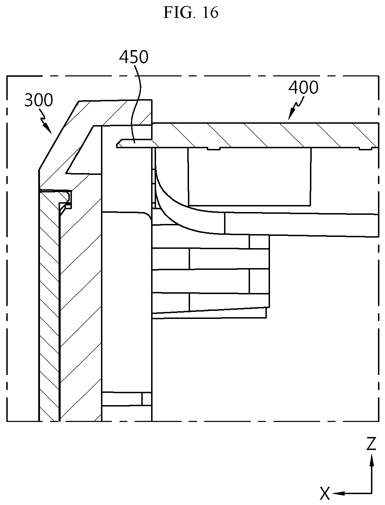

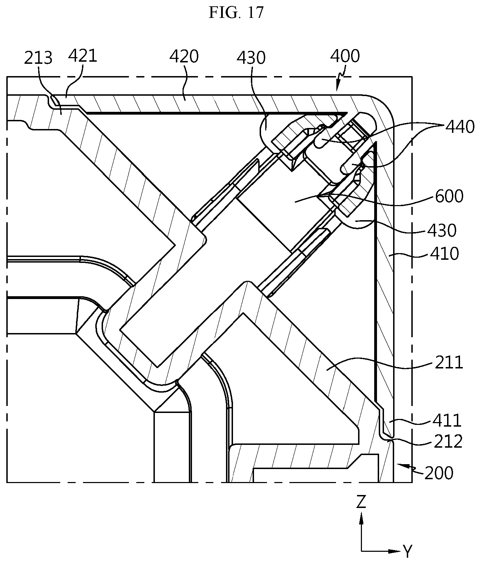

FIG. 15 is a view showing that a corner cover 400 is coupled to a corner 111, 112 of a battery pack according to an embodiment of the present disclosure. FIG. 16 is a view showing a portion of a cross-sectional configuration along the cutting line B-B' in FIG. 15. FIG. 17 is a view showing a portion of a cross-sectional configuration along the cutting line C-C' in FIG. 15. Referring to FIGS. 14 to 17, the single corner cover 400 of the battery pack according to an embodiment of the present disclosure may slidingly move to contact or adhere to the front cover 300. The protrusion 450 of the single corner cover 400 may be inserted into the front cover 300.

The single corner cover 400 may include a seating portion 411 formed along an edge of the first part 410. In addition, the single corner cover 400 may include a seating portion 421 formed along an edge of the second part 420. The seating portions 411, 421 of the single corner cover 400 may be seated on the stepped portion 213 of the corner 211. The stepped portion 213 may support the seating portions 411, 421 of the single corner cover 400. Also, the single corner cover 400 may cover the opening 212 of the corner 211.

According to this configuration of the present disclosure, the single corner cover 400 may be seated on the first stepped portion 113 and the second stepped portion 213, thereby maintaining a stable coupling state with the battery module 100 or the processing unit 200. As a result, the stability of the battery pack may be improved.

In addition, according to this configuration of the present disclosure, the battery module 100 and the processing unit 200 may have openings 112, 212 to be connected to an external configuration, and when the openings 112, 212 are exposed to the outside, the inside may be damaged by the penetration of foreign substances. The single corner cover 400 may protect the inside of the battery module 100 or the processing unit 200 by covering the openings 112, 212. As a result, the safety and life of the battery pack may be improved.

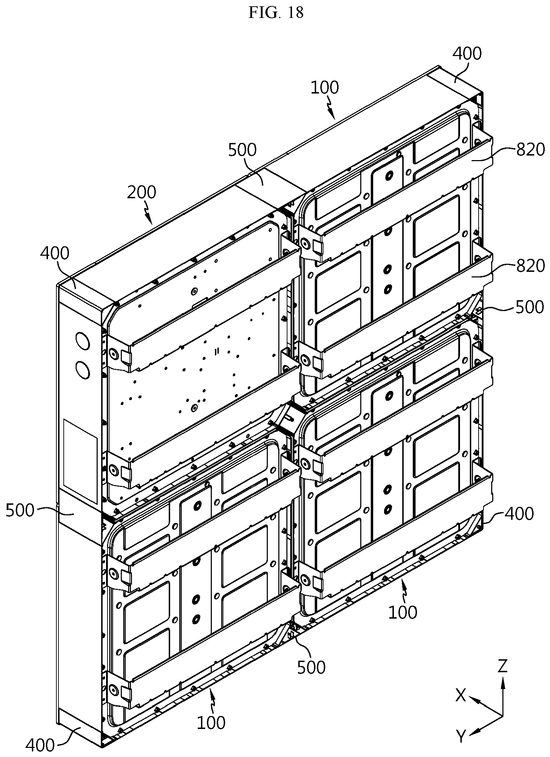

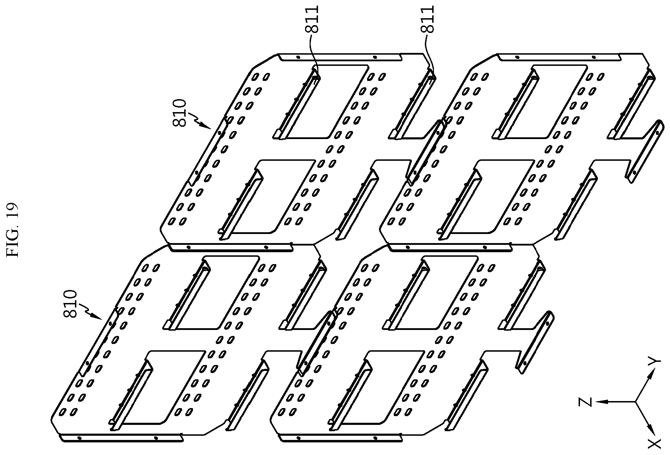

FIG. 18 is a perspective view of a battery pack according to an embodiment of the present disclosure as viewed from the rear. FIG. 19 is a view showing a wall mount bracket 810 of a battery pack according to an embodiment of the present disclosure. Referring to FIG. 18, a battery pack according to an embodiment of the present disclosure may include a coupling bar 820. The coupling bar 820 may be provided in the battery module 100 or the processing unit 200, respectively. Each of the battery module 100 or the processing unit 200 may include two coupling bars 820. The coupling bar 820 may be provided on or fastened to the rear surface of the battery module 100 or the processing unit 200. For example, referring to FIG. 18, the two coupling bars 820 provided on the rear surface of the battery module 100 may be disposed side by side. In addition, the two coupling bars 820 provided on the rear surface of the processing unit 200 may be disposed side by side.

Referring to FIG. 19, a battery pack according to an embodiment of the present disclosure may include a wall mount bracket 810. The wall mount bracket 810 may be installed on a structure such as a wall or a fixture such as an outer wall of a building. The wall mount bracket 810 may include a hanging portion 811. The coupling bar 820 of the battery module 100 or the coupling bar 820 of the processing unit 200 may be hooked or coupled to the hanging portion 811. The wall mount brackets 810 may be provided in plurality. The wall mount brackets 810 may be provided in a number equal to the sum of the number of battery modules 100 and the number of processing units 200. The wall mount bracket 810 may be provided in one-to-one correspondence with the battery module 100 and the processing unit 200.

According to this configuration of the present disclosure, the wall mount bracket 810 may be provided to correspond to the number of battery modules 100 or processing units 200 provided in the battery pack. This may facilitate installation on a wall or structure, even if the configuration or shape of the battery pack is diversified.

The plurality of battery modules 100, 100a, 100b described above are components having the same structure and shape, although different reference numerals are used for convenience of description. Also, the single corner covers 400, 400a, 400b are components having the same structure and shape, although different reference numerals are used for convenience of description.

An energy storage system according to the present disclosure includes one or more battery packs according to the present disclosure described above. Also, the energy storage system according to the present disclosure may further include general components included in the energy storage system in addition to the battery pack. In particular, the energy storage system according to the present disclosure may be a residential (building) energy storage system used to store energy in houses, buildings, or the like.

Meanwhile, the terms indicating directions as used herein such as upper, lower, left, right, front, and rear are used for convenience of description only, and it is obvious to those skilled in the art that the term may change depending on the position of the stated element or an observer.

While the present disclosure has been hereinabove described with regard to a limited number of embodiments and drawings, the present disclosure is not limited thereto and it is obvious to those skilled in the art that a variety of modifications and changes may be made thereto within the technical aspects of the present disclosure and the appended claims.

## Claims

1. A battery pack comprising:
a first battery module (100) having a first corner (111) formed by two side plates;
a processing unit (200) having a second corner (211) formed by two side plates, electrically connected to the first battery module (100) and controlling charge/discharge of the battery module (100); and
a first coupling member (600) having one side fastened to the first corner (111) and the other side fastened to the second corner (211),
wherein the first battery module (100) is located on one side of the processing unit (200), and the first corner (111) and the second corner (211) are adjacent,
wherein the battery pack further comprises:
- a double corner cover (500) configured in the form of a flat plate, hookedly coupled to the first coupling member (600) and covering the first corner (111) and the second corner (211), and
- a cable (700) passing through a first opening (112) formed at the first corner (111) and a second opening (212) formed at the second corner (211),
wherein the double corner cover (500) covers the cable (700).

2. The battery pack according to claim 1,
which further comprises a second battery module (100) located on the other side of the processing unit (200) and electrically connected to the processing unit (200); and a second coupling member (600) having one side fastened to the second battery module (100) and the other side fastened to the processing unit (200).

3. An energy storage system comprising a battery pack according to any one of claims 1 to 2.

## Patentansprüche

1. Batteriepack, umfassend:
ein erstes Batteriemodul (100) mit einer ersten Ecke (111), die durch zwei Seitenplatten gebildet ist;
eine Verarbeitungseinheit (200) mit einer zweiten Ecke (211), die durch zwei Seitenplatten gebildet ist, die elektrisch mit dem ersten Batteriemodul (100) verbunden ist und das Laden/Entladen des Batteriemoduls (100) steuert; und
ein erstes Kopplungselement (600), dessen eine Seite an der ersten Ecke (111) befestigt ist und dessen andere Seite an der zweiten Ecke (211) befestigt ist,
wobei das erste Batteriemodul (100) auf einer Seite der Verarbeitungseinheit (200) angeordnet ist und die erste Ecke (111) und die zweite Ecke (211) benachbart sind,
wobei der Batteriepack ferner umfasst:
- eine Doppel-Eckabdeckung (500), die in Form einer flachen Platte konfiguriert ist, hakenförmig mit dem ersten Kopplungselement (600) gekoppelt ist und die erste Ecke (111) und die zweite Ecke (211) abdeckt, und
- ein Kabel (700), das durch eine erste Öffnung (112), die an der ersten Ecke (111) ausgebildet ist, und eine zweite Öffnung (212), die an der zweiten Ecke (211) ausgebildet ist, verläuft,
wobei die Doppel-Eckabdeckung (500) das Kabel (700) abdeckt.

2. Der Batteriepack nach Anspruch 1, der ferner ein zweites Batteriemodul (100) umfasst, das auf der anderen Seite der Verarbeitungseinheit (200) angeordnet und elektrisch mit der Verarbeitungseinheit (200) verbunden ist; und ein zweites Kopplungselement (600), dessen eine Seite an dem zweiten Batteriemodul (100) befestigt ist und dessen andere Seite an der Verarbeitungseinheit (200) befestigt ist.

3. Energiespeichersystem, umfassend einen Batteriepack nach einem der Ansprüche 1 bis 2.

## Revendications

1. Bloc-batterie comprenant :
un premier module de batterie (100) ayant un premier angle (111) formé par deux plaques latérales ;
une unité de traitement (200) ayant un deuxième angle (211) formé par deux plaques latérales, connectée électriquement au premier module de batterie (100) et contrôlant la charge/décharge du module de batterie (100) ; et
un premier élément de couplage (600) ayant un côté fixé au premier angle (111) et l'autre côté fixé au deuxième angle (211),
dans lequel le premier module de batterie (100) est situé sur un côté de l'unité de traitement (200), et le premier angle (111) et le deuxième angle (211) sont adjacents,
dans lequel le bloc-batterie comprend en outre :
- un couvercle d'angle double (500) configuré sous la forme d'une plaque plate, couplé par accrochage au premier élément de couplage (600) et recouvrant le premier angle (111) et le deuxième angle (211), et
- un câble (700) passant à travers une première ouverture (112) formée au niveau du premier angle (111) et une deuxième ouverture (212) formée au niveau du deuxième angle (211),
dans lequel le couvercle d'angle double (500) recouvre le câble (700).

2. Le bloc-batterie selon la revendication 1, qui comprend en outre un deuxième module de batterie (100) situé de l'autre côté de l'unité de traitement (200) et connecté électriquement à l'unité de traitement (200) ; et un deuxième élément de couplage (600) ayant un côté fixé au deuxième module de batterie (100) et l'autre côté fixé à l'unité de traitement (200).

3. Système de stockage d'énergie comprenant un bloc-batterie selon l'une quelconque des revendications 1 à 2.
